**Europäisches Patentamt**

**European Patent Office**

**Office européen des brevets**

(19)

(11) Veröffentlichungsnummer: **0 200 797**
**B1**

(12) # EUROPÄISCHE PATENTSCHRIFT

(45) Veröffentlichungstag der Patentschrift:
09.08.89

(51) Int. Cl.⁴: **G 06 F 1/04**

(21) Anmeldenummer: 85105578.0

(22) Anmeldetag: 07.05.85

(54) **Monolithisch integrierte Digitalschaltung.**

(43) Veröffentlichungstag der Anmeldung:
12.11.86 Patentblatt 86/46

(45) Bekanntmachung des Hinweises auf die Patenterteilung: 09.08.89 Patentblatt 89/32

(84) Benannte Vertragsstaaten:
DE FR NL

(56) Entgegenhaltungen:
US-A- 4 503 490
PATENTS ABSTRACTS OF JAPAN, Band 8, Nr. 75 (P-266) [1512], 7. April 1984; & JP - A - 58 219 625 (OKI DENKI KOGYO K.K.) 21-12-1983
PATENTS ABSTRACTS OF JAPAN, Band 8, Nr. 1 (P-246) [1438], 6. Januar 1984; & JP - A - 58 166 419 (HITACHI SEISAKUSHO K.K.) 01-10-1983
PATENTS ABSTRACTS OF JAPAN, Band 7, Nr. 176 (P-214) [1321], 4. August 1983; & JP - A - 58 80 724 (MITSUBISHI DENKI K.K.) 14-05-1983

(73) Patentinhaber: Deutsche ITT Industries GmbH
Hans-Bunte-Strasse 19 Postfach 840
D-7800 Freiburg (DE)

(72) Erfinder: Uhlenhoff, Arnold, Dipl.-Ing.
Hölderlinstrasse 33
D-7830 Emmendingen (DE)

EP 0 200 797 B1

Jouve, 18, rue St-Denis, 75001 Paris, France

**Beschreibung**

Die Erfindung betrifft eine monolithisch integrierte Digitalschaltung mit mindestens einer an einem SystemtaktSignal betriebenen Datenverarbeitungsschaltung für mehrstellige, insbesondere vielstellige, Datensignale. Als Beispiele für solche integrierten Digitalschaltungen können die bereits handelsüblichen Signalprozessoren und Mikroprozessoren dienen. Aber auch integrierte Digitalschaltungen, die Teil eines aus mehreren integrierten Schaltungen bestehenden Systems sind und entsprechende an einem Systemtakt-Signal betriebene Datenverarbeitungsschaltungen enthalten, sind bereits handelsüblich und auch vorbeschrieben, vgl. beispielsweise das aus mehreren integrierten Schaltungen bestehende System zur digitalen Signalverarbeitung in Fernsehempfängern, wie es in « Electronics », 11.08.1981, Seiten 97 bis 103 beschrieben ist. Ein wesentliches Merkmal derartiger integrierter Digitalschaltungen ist, daß mehrstellige Datensignale von den Datenverarbeitungsschaltungen im Parallelbetrieb verarbeitet werden, d. h. daß die mehrstelligen Datensignale während weniger Taktperioden in z. B. Paralleladdierern, Parallelmultiplizierern, Parallelkomparatoren etc. verarbeitet werden.

Aufgrund dieses Parallel-Verarbeitungsprinzips ist der Aufwand an Kristallfläche der integrierten Digitalschaltung groß, so daß der Halbleiterhersteller immer das Bestreben hat, ein zu integrierendes elektronisches System mit möglichst wenig Kristallfläche zu realisieren.

Ein weiterer Gesichtspunkt bei der Integrierung ganzer Systeme ist die Wahl der halbleitertechnischen Integrierungstechnik, also die Frage, ob Bipolar- oder MOSSchaltungen mit ihren jeweils speziellen Untergruppen, wie z. B. I²L (bipolar) oder N-Kanal, CMOS etc. im Hinblick auf die jeder dieser Integrierungstechniken eigenen maximal möglichen Verarbeitungsgeschwindigkeiten eingesetzt werden sollen. Wenn die Frequenz des Systemtaktes systembedingt vorgegeben ist, wie es beispielsweise bei den oben erwähnten Digitalschaltungen für Fernsehempfänger der Fall ist, legt dies den Aufwand an Kristallfläche bereits weitgehend fest, da nach bisher einhelliger Meinung der Fachwelt bei derart hohen Frequenzen nur eine Parallelverarbeitung der Datensignale möglich ist.

Die Erfindung schlägt nun zur Reduzierung der Kristallfläche bei Digitalschaltungen einen anderen Weg ein, in dem sie den Systemtakt zwar beibehält, aber im wesentlichen nur noch zur Synchronisierung der einzelnen Datenverarbeitungsschaltungen benutzt, während als eigentliches Taktsignal für die Datenverarbeitung ein intern von einem Taktoszillator erzeugtes Taktsignal dient, der aus einer ungeraden Anzahl ringgeschalteter invertierender Stufen besteht, d. h. daß ein Ringoszillator benutzt wird, dessen Frequenz von der gewählten Integrierungstechnik zwar abhängig ist, aber die jeder speziellen Integrierungstechnik inhärenten Verzögerungseigenschaften von invertierenden Stufen ausnutzt. Ein solcher Taktoszillator ist bekannt ; siehe z. B. die japanische Anmeldung JP-A-58-219 625. Wenn sich also die Entwicklung der Vergangenheit zu immer schnelleren Integrierungstechniken weiter fortsetzt, so können durch die Erfindung die dann möglichen integrierten Digitalschaltungen sozusagen automatisch diesem Geschwindigkeitsfortschritt angepaßt werden.

Der interne Taktoszillator taktet nun anstatt parallel arbeitende Datenverarbeitungsschaltungen, wie dies beim erwähnten Stand der Technik üblich ist, entsprechende serielle Datenverarbeitungsschaltungen. Anstatt Paralleladdierern, -multiplizierern etc. sind also Serienaddierer, multiplizierer etc. bei der Erfindung verwendet. Die Verarbeitungsdauer wird beispielsweise bei einem Serienaddierer von dem darin nur einmal vorhandenen Volladdierer bestimmt und ist wesentlich kürzer als die Periodendauer des Systemtakt-Signals. Da diese Verarbeitungszeit außerdem im gleichen Sinne integrationstechnik-bedingt ist wie die Frequenz des mitintegrierten Taktoszillators, kann diese durch Wahl der Anzahl ringgeschalteter invertierender Stufen an die Verarbeitungszeit ohne weiteres angepaßt werden, und zwar in der Weise, wie es im Patentanspruch angegeben ist.

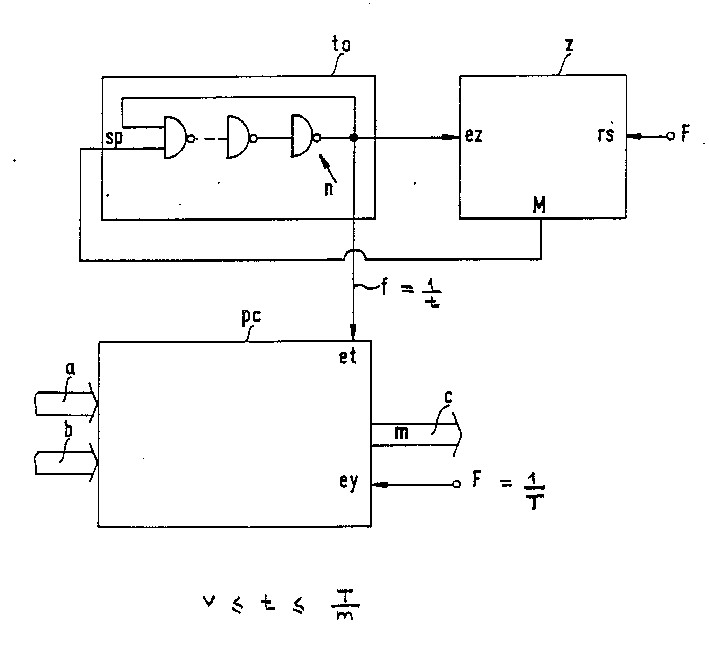

Zur weiteren Erläuterung wird auf die Figur der Zeichnung und auf deren nun folgende Erläuterung verwiesen. Die Figur zeigt ein stark schematisiertes Blockschaltbild eines Ausführungsbeispiels der Erfindung. Der Taktoszillator to zeigt als Beispiel für die Anzahl n ungerader, ringgeschalteter invertier ender Stufen die signalflußmäßige Serienschaltung eines NAND-Gatters und zweier Inverter, wobei der Ausgang des rechts liegenden Inverters mit einem Eingang des NAND-Gatters verbunden ist, wodurch die Ringschaltung zustande kommt. Durch die gestrichelte Verbindungslinie zwischen dem NAND-Gatter und dem darauffolgenden, mittleren Inverter ist angedeutet, daß auch Reihenschaltungen mit anderer ungerader Zahl n möglich sind. Die sich einstellende Schwingfrequenz des Taktoszillators to ergibt sich aus der Summe der Gatterlaufzeiten der invertierenden Stufen, wobei die Anzahl n größer als 1 ist, also mindestens 3 beträgt.

Der Ausgang des Taktoszillators to ist einerseits mit dem Zähleingang ez des Zählers z verbunden, der somit die Impulse des Taktsignals f zählt. Andererseits ist der Ausgang des Taktoszillators to auch mit dem Takteingang et der seriellen Datenverarbeitungsschaltung pc verbunden. Im Ausführungsbeispiel der Figur sind dieser zwei zu verarbeitende mehrstellige Digitalsignale a, b eingangsseitig zugeführt, und das entsprechende Ausgangssignal c soll die Stellenzahl m haben. Wenn also beispielsweise die serielle Datenverarbeitungsschaltung ein Serienaddierer ist und die Digitalsignale a, b jeweils fünfstellig sind, so ist das Ausgangssignal c sechsstellig, so daß m = 6 ist. Der seriellen Datenverarbeitungsschaltung pc ist ferner über deren Synchronisiereingang ey das Systemtakt-Signal F zugeführt. Ebenso ist dem Reseteingang rs des Zählers z das Systemtakt-signal F zugeführt. Dadurch läßt sich erreichen, daß die Datensignale a, b und das Ausgangssignal c mit dem Systemtakt synchronisiert werden können, d. h. daß insbesondere das Ausgangssignal c nur zu immer gleichen Systemtakt-Zeitpunkten an andere Teilschaltungen der integrierten Digitalschaltung oder nach außerhalb weitergeleitet werden.

Derjenige Zählerstandausgang des Zählers z, dessen Ordnungszahl M mit der Stellenzahl m des Ausgangssignals c der Datenverarbeitungsschaltung pc identisch ist, ist mit dem Stoppeingang sp des Taktoszillators to verbunden ; in der Figur ist dies der zweite Eingang des bereits erwähnten NAND-Gatters. Dadurch wird erreicht, daß der Taktoszillator m Taktimpulse erzeugt und dann bis zur nächsten Systemtakt-Signalflanke stehenbleibt. Der entsprechende Binärsignalpegel am Ausgang M des Zählers z ist natürlich in Verbindung mit dem NAND-Gatter und dessen Wirkungsweise entsprechend dem eben geschilderten Funktionsablauf zu wählen.

Wie bereits erwähnt wurde, ist die Frequenz des Taktsignals f des Taktoszillators to durch Wahl der Anzahl n in Stufen wählbar. Diese Wahl muß so erfolgen, daß einerseits die Bedingung erfüllt ist, daß das Produkt aus der Stellenzahl m und der Periodendauer t des Taktsignals f kleiner oder gleich der Periodendauer T des Systemtakt-Signals F ist, und daß andererseits die Bedingung erfüllt ist, daß die Periodendauer t größer oder. gleich der für die Verarbeitung einer Stelle der Datensignale a, b erforderlichen Verarbeitungszeit v der digitalen Datenverarbeitungsschaltung pc ist ; in Form einer Ungleichung ausgedrückt lautet diese Bemessungsregel demzufolge :

$$T/m \geqslant t \geqslant v.$$

Gegenüber derzeit üblichen Systemen, bei denen integrierten Schaltungen von einem externen Taktoszillator die Taktsignale zugeführt werden, die innerhalb der integrierten Schaltung an die zu versorgenden Stufen verteilt werden — was wiederum entsprechende Leitungsführung mit zugehörigem Platzbedarf erfordert, wobei diese Leitungen Störstrahlungssender sein können -, gegenüber diesen Systemen hat die Erfindung den weiteren großen Vorteil, daß einzelnen Teilschaltungen einer integrierten Schaltung jeweils entsprechende Taktoszillatoren to mit Zählern z zugeordnet werden können, so daß lange Leitungsführung und deren Nachteile entfallen. Auch unter dem Gesichtspunkt der Leistungsaufteilung der erforderlichen Taktleistung ist dies vorteilhaft.

## Patentanspruch

Monolithisch integrierte Digitalschaltung mit mindestens einer an einem Systemtakt-Signal (F) betriebenen Datenverarbeitungsschaltung (pc) für mehrstellige, insbesondere vielstellige, Datensignale (a, b), wobei diese Digitalschaltung die folgenden Merkmale aufweist :

zur Erzeugung eines internen Taktsignals (f) ist ein Taktoszillator (to) mit einer ungeraden Anzahl (n) ringgeschalteter invertierender Stufen mitintegriert, wobei n größer ist als eins, als Datenverarbeitungsschaltung dient eine serielle Datenverarbeitungsschaltung (pc) der die zu verarbeitenden mehrstelligen Datensignale (a, b) eingangsseitig zugeführt sind und die die Stellen nacheinander in m Taktimpulsen zu einem m-stelligen Ausgangssignal (c) verarbeitet,

dem Zähleingang (er) eines die Taktimpulse (f) zählenden Zählers (z) und dem Takteingang (et) der Datenverarbeitungsschaltung (pc) ist das Ausgangssignal des Taktoszillators (to) zugeführt,

derjenige Zählerstandausgang des Zählers (z), dessen Ordnungszahl (M) mit der Stellenzahl (m) des Ausgangssignals (c) der Datenverarbeitungsschaltung (pc) identisch ist, ist mit dem Stoppeingang (sp) des Taktoszillators (to) verbunden, so daß der Taktoszillator (to) gestoppt wird, wenn eine der Stellenzahl (m) entsprechende Anzahl von Taktimpulsen im Zähler (z) gezählt sind,

dem Reseteingang (rs) des Zählers (z) und dem Synchronisiereingang (ey) der Datenverarbeitungsschaltung (pc) ist das Systemtakt-Signal (F) zugeführt, und

die Frequenz des internen Taktsignals (f) ist durch Wahl der Anzahl (n) so festgelegt, daß einerseits die Bedingung erfüllt ist, daß das Produkt aus der Stellenzahl (m) und der Periodendauer (t) des internen Taktsignals (f) kleiner oder gleich der Periodendauer (T) des Systemtakt-Signals (F) ist, und daß andererseits die Bedingung erfüllt ist, daß die Periodendauer (t) größer oder gleich der für die Verarbeitung einer Stelle der Datensignale (a, b) erforderlichen Verarbeitungszeit (v) der digitalen Datenverarbeitungsschaltung (pc) ist.

## Claim

Momolithic integrated digital circuit comprising at least one system clock signal (F) driven data processing circuit (pc) far multi-digit and, in particular for such data signals (a, b) which contain large numbers of digits, with this digital circuit showing ta have the following features :

for producing an internal clock signal (f) a clock oscillator (to) employing an odd number (n) of ring-connected inverting stages is integrated as well, with n being greater than one,

as the data processing circuit there is used a serial data processing circuit (pc), to the input of which there are fed the multi-digit data signals (a, b) to be processed, and which successively processes the digits into m clock pulses to form an m-digit output signal (c),

to both the counting input (ez) of a counter (z) for counting the clock pulses (f) and to the clock input (et) of the data processing circuit (pc) there is fed the output signal of the clock oscillator (to),

that particular counter-reading output of said counter (z) whose ordinal number (M) is identical to the number of digits (m) of the output signal (c) of said data processing circuit (pc), is connected to the stop input (sp) of said clock oscillator (to), so as to stop said clock oscillator (to) as soon as a number of clock pulses corresponding to the number of digits (m) has been counted in said counter (z),

the system clock signal (F) is fed to both the reset input (rs) of the counter (z) and to the synchronizing input (ey) of said data processing circuit (pc), and

the frequency of the internal clock signal (f) is in such a way fixed by selecting the number (n) as to meet, on the one hand, the requirement according to which the product of both the number of digits (m) and the period (t) of the internal clock signal (f) must be smaller than or equal to the period (T) of the system clock signal (F) and, on the other hand,, the requirement according to which the period (t) must be longer than or equal to the processing time duration (v) required by said digital data processing circuit (pc) for processing one digit of said data signals (a, b).

**Revendication**

Circuit intégré numérique monolithique comportant au moins un circuit (pc) de traitement de données, fonctionnant avec un signal (F) de la cadence du système et servant à traiter des signaux de données (a, b) comportant plusieurs éléments et notamment un grand nombre d'éléments, ce circuit numérique présentant les caractéristiques suivantes :

pour la production d'un signal de cadence interne (f), il est prévu un oscillateur (to) délivrant la cadence, qui est intégré conjointement et possède un nombre impair (n) d'étages inverseurs branchés en anneau, n étant supérieur à un,

comme circuit de traitement des données, on utilise un circuit (pc) de traitement des données, à l'entrée duquel sont envoyés les signaux de données (a, b) formés de plusieurs éléments, devant être traités, et qui traite ces éléments successivement dans m impulsions de cadence, pour former un signal de sortie (c) formé de m éléments,

le signal de sortie de l'oscillateur (to) fournissant la cadence est envoyé à l'entrée de comptage (ez) d'un compteur (z) comptant les impulsions de cadence (f) et à l'entrée de cadence (et) du circuit (pc) de traitement des données,

la sortie délivrant l'état de comptage du compteur (z), dont le nombre ordinal (M) est identique au nombre d'éléments (m) du signal de sortie (c) du circuit (pc) de traitement de données, est reliée à l'entrée d'arrêt (sp) de l'oscillateur (to) délivrant la cadence, de sorte que cet oscillateur est commandé lorsqu'un nombre d'impulsions de cadence, qui correspond au nombre d'éléments (m), est compté dans le compteur (z),

le signal (F) de la cadence du système est envoyé à l'entrée de remise à zéro (rs) du compteur (z) et à l'entrée de synchronisation (ey) du circuit (pc) de traitement des données, et

la fréquence du signal de cadence interne (f) est fixée grâce au choix du nombre (m) de manière à satisfaire d'une part la condition, selon laquelle le produit du nombre (m) d'éléments par la durée (t) de la période du signal de cadence interne (f) est inférieur ou égal à la durée (T) de la période du signal (F) de la cadence du système, et d'autre part la condition, selon laquelle la durée (t) de la période est supérieure ou égale à la durée de traitement (v), qui est nécessaire au circuit numérique (pc) de traitement des données pour le traitement d'un élément des signaux de données (a, b).

$$f = \frac{1}{t}$$

$$F = \frac{1}{T}$$

$$v \leqslant t \leqslant \frac{T}{m}$$